# EUROPEAN PATENT APPLICATION

(11) **EP 4 495 175 A1**
(43) Date of publication of application: **22.01.2025**
(21) Application number: 23186416.6
(22) Date of filing: 19.07.2023
(51) Int. Cl.: C08K 3/22, C08L 71/02, C08K 5/523, C08K 5/544, C08K 5/5419, C08K 3/04, C08K 3/34, C08K 5/521, C08K 5/5425, C08K 3/08, C08K 3/26, C08K 3/28, C08K 3/38

(54) **THERMALLY CONDUCTIVE TWO-COMPONENT COMPOSITION WITH CURING RETARDER**

(71) Applicant: Sika Technology AG, 6340 Baar (CH)
(72) Inventor: MENNECKE, Klaas, 8048 Zürich (CH)
(74) Representative: Sika Patent Attorneys

(57) **Abstract**

The invention relates to a two-component composition, comprising between 3 and 15 wt.-% of at least one organic polymer containing reactive silane groups, between 70 and 92 wt.-% of at least one filler, between more than 0 to 2 wt.-% of drying agent, between more than 0 to 2 wt.-% of retarder, optionally at least one plasticizer, optionally additional organosilanes, optionally at least one catalyst for the curing of silane-functional polymers, characterized in that said drying agent is propyltrimethoxysilane and that said retarder is selected from the list consisting of phenylmethoxysilane, vinyltrimethoxysilane, octyltrimethoxysilane, propytrimethoxysilane, and any mixture of these retarders.

The two-component composition can be formulated to show excellent thermal conductivity and is particularly suitable for battery and electronics assembly and at the same time offers long open time and fast curing behavior.

## Description

### Technical field

The invention relates two-component compositions based on silane-functional polymers and their use as thermally conductive adhesives, sealants, or coatings.

### State of the art

Two-component compositions based on polymers containing reactive silane groups play an important role in many industrial applications, for example as adhesives, sealants or coatings. Polymers containing reactive silane groups are in particular polydiorganosiloxanes, which are commonly referred to as "silicones" or "silicone rubbers", and organic polymers containing reactive silane groups, which are also referred to as "silane-functional polymers", "silane-modified polymers" (SMP) or "silane-terminated polymers" (STP). Compositions containing either of these polymers harden via crosslinking reactions of the reactive silane groups on the polymers, which hydrolyze under the influence of moisture, condense with one another as silanol groups and thus form a covalently bonded network and, macroscopically, a cured material. Both types of these polymers have distinct properties and advantages. For example, silicones possess excellent thermal stability while silane-functional organic polymers commonly have advantages regarding adhesive properties and compatibility with substrate materials.

For example, WO2017050762 describes two-component composition based on silane-functional polymers which shows long shelf life without the requirement of expensive stabilizers and is suitable to be used as a low E-modulus joint sealant offering excellent durability in high movement joints.

With the increasing use of batteries and electronic equipment nowadays, the demand for suitable adhesives and sealants in contact with these electronic elements or devices has risen significantly. Especially in electric automobile assembly, large batteries and a multitude of electronic parts require large amounts of such sealants and adhesives that cover, seal, or bond electronics and batteries directly. A particular requirement for these adhesive and selant materials is a high heat conductivity, since batteries and electronics generate significant amounts of heat while operating that must be dissipated efficiently to prevent detrimental heat accumulation on the batteries and electronic parts. This aspect has proven to be a severe problem for traditionally used two-component compositions, e.g. based on silane-functional polymers. Commonly known such compositions possess a poor heat conductivity and rather act as thermal insulators than efficient heat conductors. There have been several attempts to formulate two-component compositions with high heat conductivity. Commonly used are silane-functional polymer compositions with special fillers. These marketed compositions are curable and show adequate thermal conductivity.

Publication WO2020165288 is an example that discloses a moisture-curable composition based on silane-functional polymers with such fillers that show excellent thermal conductivity and is particularly suitable as adhesive, gap filler, or sealant suitable for e-coat applications and battery bonding especially in automobile assembly.

However, it remains challenging to create a curable composition with an adequately long open time combined with a fast-curing behavior. This is a critical problem in the rather young electric automobile industry, because the material's viscosity should not increase significantly during application of the curable composition but then be able to undergo fast curing to allow for efficient production processes. The current state of the art does not offer easy solutions to this problem. If long open time is achieved, fast curing is not possible and vice versa. Thus, there is an increasing demand for a curable composition with high thermal curability that is suitable for battery and electronics assembly and at the same time offers long open time and fast curing behavior.

### Summary of the invention

It is therefore an object of the present invention to provide a curable, thermally conducting composition based on organic polymers containing reactive silane groups that is suitable as gap-filler, sealant, or adhesive for batteries and electronic equipment with an initial curing retardancy effect that offers longer open time combined with fast curing. The present invention achieves these objects with the features of independent claim 1.

A two-component composition, comprising in a first component between 3 and 15 wt.-%, based on the total two-component composition, of at least one organic polymer **P** containing reactive silane groups, comprising up to 2 wt.-%, based on the total two-component composition, of a retarder **R** selected selected from alkyl- or alkenyltrimethoxysilanes, preferably from phenyltrimethoxysilane (PhTMO), vinyltrimethoxysilane (VTMO), octyltrimethoxysilane (OCTMO), propytrimethoxysilane (PTMO), and any mixture of these retarders, and comprising up to 4 wt.-%, based on the total two-component composition, of a suitable drying agent/desiccant **D** which is propyltrimethoxysilane (PTMO), comprising in both components between 70 and 92 wt.-%, based on the total two-component composition, of at least one filler **F**, and comprising in a second component between more than 0 and 5 wt.-%, based on the total two-component composition, of water, surprisingly enables the formulation of a two-component material with high thermal conductivity that allows for long open times combined with fast curing behavior. The addition of the retarder delays the onset of the curing reaction, i.e., keeping the viscosity low and yielding a longer open time, but still enabling a fast-curing reaction thereafter. The retarder must be used together with the drying agent. Without the drying agent premature curing is observed, because of the adsorbed water stored in the filler. Above 2 wt.-%., based on the total two-component composition, PTMO acts as a retarder.

Further aspects of the invention are the subject of further independent claims. Particularly preferred embodiments of the invention are the subject of the dependent claims.

### Ways of executing the invention

The present invention relates in a first aspect to a two-component composition, comprising
in a first component **A**
   - between 3 and 15 wt.-%, based on the total two-component composition, of at least one organic polymer **P** containing reactive silane groups;
   - at least one filler **F**;
   - optionally at least one plasticizer **PL**;
   - between 0 and 3 wt.-%, based on the total two-component composition, of at of said at least one additional organosilane different from drying agent **D** and retarder **R**, preferably acting as adhesion promoter and/or co-catalyst;
   - between more than 0 and 2 wt.-%, based on the total two-component composition, of at least one drying agent **D**, wherein drying agent **D** is propyltrimethoxysilane;
   - between more than 0 and 2 wt.-%, based on the total two-component composition, of at least one retarder **R** selected from alkyl- or alkenyltrimethoxysilanes;
in a second component **B**
   - at least one filler **F**;
   - optionally at least one plasticizer **PL**;
   - between more than 0 and 5 wt.-%, based on the total two-component composition, of water;
   - between 0 and 1 wt.-%, based on the total two-component composition, of at least one catalyst **C**;
wherein the total amount based on the total two-component composition of filler **F** is between 70 and 92 wt.-%; and
wherein the total amount based on the total two-component composition of plasticizer **PL** is up to 10 wt.-%.

In the present document, the term "reactive silane group" refers to a silyl group that is bonded to an organic radical and has one to three, especially two or three, hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols. "Hydroxysilane", "isocyanatosilane", "aminosilane" and "mercaptosilane" refer respectively to organoalkoxysilanes having one or more hydroxyl, isocyanato, amino or mercapto groups on the organic radical in addition to the silane group.

"Organofunctional compound" refers to a compound that contains a functional group that is bound via a carbon atom. For example, "aminofunctional compound" is a compound having an aminoalkyl group.

"Primary amino group" refers to an NH₂ group that is bonded to an organic radical, and "secondary amino group" refers to an NH group that is bonded to two organic radicals which may also together be part of a ring, and "tertiary amino group" refers to an N group that is bonded to three organic radicals, two or three of which together may also be part of one or more rings. Accordingly, "primary aminosilanes" are aminosilanes comprising a primary amino group and "secondary aminosilanes" are aminosilanes comprising a secondary amino group. The latter also encompasses compounds having both a primary and a secondary amino group.

"Polyoxyalkylene radical" refers to a linear or branched hydrocarbyl radical which contains ether groups and contains more than two repeat units of the (OR) type in succession, where R is a linear or branched alkylene radical, as for example from the polyaddition of ethylene oxide or 1,2-propylene oxide onto starter molecules having two active hydrogen atoms.

Substance names beginning with "poly", such as polyol or polyisocyanate, refer to substances containing, in a formal sense, two or more of the functional groups that occur in their name per molecule.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

The term "polyether containing reactive silane groups" also encompasses organic polymers which contain silane groups and which, in addition to polyether units, may also contain urethane groups, urea groups or thiourethane groups. Such polyethers containing reactive silane groups may also be referred to as "polyurethanes containing reactive silane groups".

"Molecular weight" is understood in the present document to mean the molar mass (in grams per mole) of a molecule or part of a molecule, also referred to as "radical". The term "radical" is used in this document in a formal sense, meaning a molecular rest bound to an atom by a covalent bond, while the bond is formally "cut" to describe the molecular rest attached to it. Molecular weight of polymers is understood as the average molecular weight of their chain length distribution. "Average molecular weight" is understood herein to mean the number-average Mₙ of an oligomeric or polymeric mixture of molecules or radicals, which is typically determined by means of gel permeation chromatography (GPC) against polystyrene as standard.

"Weight percent" or "percentage by weight", and its abbreviation "wt.-%" refer to the weight percentage of a certain compound in a total composition, if not otherwise defined. The terms "weight" and "mass" are used interchangeably in this document and refer to the mass as a property of a physical body and commonly measured in kilograms (kg).

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

"Room temperature" refers to a temperature of 23°C.

A dotted line in the formulae in this document in each case represents the bond between a substituent and the corresponding molecular radical.

The term "does not contain polydiorganosiloxanes" means that no such compounds have been added during formulation of the composition. If traces of such species are unknowingly and/or unavoidably present, for example stemming from the synthesis of the silane-functional polymer or due to condensation reactions of silane-functional diorganosilane compounds possibly present in the composition, these are not considered as polydiorganosiloxanes in the meaning of this term. In simpler words, the term "does not contain polydiorganosiloxanes" means that no silicone oils or reactive silicone polymers, in particular polydimethylsiloxanes, were added during formulation of the composition.

"Retardancy" or "retarding effect" herein refers to a desired delay in curing of the moisture-curable composition according to the invention, a phenomenon that is for example observable by a delay in viscosity development in the mixed two-component composition. When looking at a time (s) vs. viscosity plot (Pa·s), said phenomenon manifests itself in a prolonged duration with low viscosity (0-2000 Pa s) and a subsequent steep increase in viscosity. "Retarder" refers to the molecules that can exhibit the retardancy or retarding effect as described above.

The composition according to the present invention comprises between 3 and 15 wt.-%, preferably between 4 and 12 wt.-%, in particular between 5 and 10 wt.-%, based on the total two-component composition, of at least one organic polymer **P** containing reactive silane groups.

In preferred embodiments, the composition comprises between 3 - 8 wt.-%, based on the total two-component composition, of said polymer **P** containing reactive silane groups. A higher amount of polymer **P** generally leads to a cured product with better mechanical performance, such as resilience or elasticity. However, for certain applications, a ductile, pasty product is sufficient, if not even advantageous, since it can be removed more easily when the object bonded with the cured composition needs to be disassembled. Furthermore, the higher the amount of polymer **P**, the lower the thermal conductivity generally will be, as the maximum possible amount of (thermally conductive) filler **F** decreases accordingly.

If the amount of polymer **P** is too low, the composition does not cure properly into a useful pasty product.

The organic polymer **P** containing reactive silane groups is in particular a polyurethane, polyolefin, polyester, polycarbonate, polyamide, poly(meth)acrylate or polyether or a mixed form of these polymers, each of which bears one or preferably more than one reactive silane group. The silane groups may be in pendant positions in the chain or in terminal positions and are bonded to the organic polymer via a carbon atom.

More preferably, the organic polymer **P** containing reactive silane groups is a polyolefin containing reactive silane groups or a polyurethane containing reactive silane groups or a polyether containing reactive silane groups or a mixed form of these polymers.

Most preferably, the organic polymer containing reactive silane groups is a polyether containing reactive silane groups.

The silane groups present in the organic polymer containing reactive silane groups are preferably alkoxysilane groups, especially alkoxysilane groups of the formula (VII) 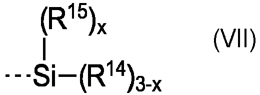 where
R¹⁴ is a linear or branched, monovalent hydrocarbyl radical having 1 to 5 carbon atoms, especially methyl or ethyl or isopropyl;
R¹⁵ is a linear or branched, monovalent hydrocarbyl radical having 1 to 8 carbon atoms, especially methyl or ethyl; and
x is a value of 0 or 1 or 2, preferably 0 or 1, especially 0.

More preferably R¹⁴ is methyl or ethyl.

For particular applications, the R¹⁴ radical is preferably an ethyl group, since, in this case, ecologically and toxicologically harmless ethanol is released in the course of curing of the composition.

Particular preference is given to trimethoxysilane groups, dimethoxymethylsilane groups or triethoxysilane groups.

In this context, methoxysilane groups have the advantage that they are particularly reactive, and ethoxysilane groups have the advantage that they are toxicologically advantageous and particularly storage-stable.

The organic polymer containing reactive silane groups has an average of preferably 1.3 to 4, especially 1.5 to 3, more preferably 1.7 to 2.8, silane groups per molecule. The silane groups are preferably terminal.

The organic polymer containing reactive silane groups preferably has a average molecular weight, determined by means of GPC against a polystyrene standard, in the range from 1'000 to 30'000 g/mol, especially from 2'000 to 20'000 g/mol. The organic polymer containing reactive silane groups preferably has a silane equivalent weight of 300 to 25'000 g/eq, especially of 500 to 15'000 g/eq.

The organic polymer containing reactive silane groups may be solid or liquid at room temperature. It is preferably liquid at room temperature.

Most preferably, the organic polymer containing reactive silane groups is a polymer containing reactive silane groups that is liquid at room temperature, where the silane groups are especially dialkoxysilane groups and/or trialkoxysilane groups, more preferably trimethoxysilane groups, methyldimethoxysilane groups, or triethoxysilane groups.

Processes for preparing organic polymers containing reactive silane groups are known to the person skilled in the art.

In a preferred process, organic polymers containing reactive silane groups are obtainable from the reaction of organic polymers containing allyl groups with hydrosilanes, optionally with chain extension using, for example, diisocyanates. In a further preferred process, polyethers containing reactive silane groups are obtainable from the copolymerization of alkylene oxides and epoxysilanes, optionally with chain extension using, for example, diisocyanates.

In a further preferred process, organic polymers containing reactive silane groups are obtainable from the reaction of organic polyols with isocyanatosilanes, optionally with chain extension using diisocyanates.

In a further preferred process, polyethers containing reactive silane groups are obtainable from the reaction of organic polymers containing isocyanate groups, especially NCO-terminated urethane polymers from the reaction of polyols with a superstoichiometric amount of polyisocyanates, with aminosilanes, hydroxysilanes or mercaptosilanes. This process enables the use of a multitude of inexpensive starting materials of good commercial availability, by means of which it is possible to obtain different polymer properties, for example high extensibility, high strength, low modulus of elasticity, low glass transition point or high weathering resistance.

In some preferred embodiments, the organic polymer **P** containing reactive silane groups is obtainable from the reaction of NCO-terminated urethane polyethers with aminosilanes or hydroxysilanes. Suitable NCO-terminated urethane polymers are obtainable from the reaction of polyols, especially polyether polyols, in particular polyoxyalkylenediols or polyoxyalkylenetriols, preferably polyoxypropylenediols or polyoxypropylenetriols, with a superstoichiometric amount of polyisocyanates, especially diisocyanates. Also, other polyols, such as poly(meth)acrylate polyols, polyhydrocarbon polyols, in particular polybutadiene polyols, polyhdroxy functional fats or oils, polycarbonate polyols, polyester polyols and polyhydroxy functional acrylonitrilie/butadiene copolymers are suitable. Furthermore, small amounts of low molecular weight dihydric or polyhydric alcohols, such as diols, glycols, and sugar alcohols may be used as additives.

Preferably, the reaction between the polyisocyanate and the polyol is conducted with exclusion of moisture at a temperature of 50°C to 160°C, optionally in the presence of suitable catalysts, with metered addition of the polyisocyanate in such a way that the isocyanate groups thereof are present in a stoichiometric excess in relation to the hydroxyl groups of the polyol. More particularly, the excess of polyisocyanate is chosen such that a content of free isocyanate groups of 0.1% to 5% by weight, preferably 0.2% to 4% by weight, more preferably 0.3% to 3% by weight, based on the overall polymer, remains in the resulting urethane polymer after the reaction of all hydroxyl groups. Preferred diisocyanates are selected from the group consisting of hexamethylene 1,6-diisocyanate (HDI), 1-isocyanato-3,3,5-trimethyl-5-isocyanatomethylcyclohexane (= isophorone diisocyanate or IPDI), tolylene 2,4- and 2,6-diisocyanate and any desired mixtures of these isomers (TDI) and diphenylmethane 4,4'-, 2,4'- and 2,2'-diisocyanate and any desired mixtures of these isomers (MDI). Particular preference is given to IPDI or TDI. Most preferred is IPDI. In this way, polyethers containing reactive silane groups with particularly good lightfastness are obtained.

Especially suitable as polyether polyols are polyoxyalkylenediols or polyoxyalkylenetriols having a degree of unsaturation lower than 0.02 meq/g, especially lower than 0.01 meq/g, and a mean molecular weight in the range from 400 to 25'000 g/mol, especially 1000 to 20'000 g/mol.

As well as polyether polyols, it is also possible to use portions of other polyols, especially polyacrylate polyols, and low molecular weight diols or triols.

Suitable aminosilanes for the reaction with an NCO-terminated urethane polyether are primary and secondary aminosilanes. Preference is given to 3-aminopropyltrimethoxysilane, 3-aminopropyldimethoxymethylsilane, 4-aminobutyltrimethoxysilane, 4-amino-3-methylbutyltrimethoxysilane, 4-amino-3,3-dimethylbutyltrimethoxysilane, N-butyl-3-aminopropyltrimethoxysilane, N-phenyl-3-aminopropyltrimethoxysilane, adducts formed from primary aminosilanes such as 3-aminopropyltrimethoxysilane, 3-aminopropyldimethoxymethylsilane or N-(2-aminoethyl)-3-aminopropyltrimethoxysilane and Michael acceptors such as acrylonitrile, (meth)acrylic esters, (meth)acrylamides, maleic or fumaric diesters, citraconic diesters or itaconic diesters, especially dimethyl or diethyl N-(3-trimethoxysilylpropyl)aminosuccinate. Likewise suitable are analogs of the aminosilanes mentioned with ethoxy or isopropoxy groups in place of the methoxy groups bonded to the silicon atom.

Suitable hydroxysilanes for the reaction with an NCO-terminated urethane polyether are especially obtainable from the addition of aminosilanes onto lactones or onto cyclic carbonates or onto lactides.

Aminosilanes suitable for the purpose are especially 3-aminopropyltrimethoxysilane, 3-aminopropyltriethoxysilane, 4-aminobutyltrimethoxysilane, 4-aminobutyltriethoxysilane, 4-amino-3-methylbutyltrimethoxysilane, 4-amino-3-methylbutyltriethoxysilane, 4-amino-3,3-dimethylbutyltrimethoxysilane, 4-amino-3,3-dimethylbutyltriethoxysilane, 2-aminoethyltrimethoxysilane or 2-aminoethyltriethoxysilane. Particular preference is given to 3-aminopropyltrimethoxysilane, 3-aminopropyltriethoxysilane, 4-amino-3,3-dimethylbutyl-trimethoxysilane or 4-amino-3,3-dimethylbutyltriethoxysilane.

Suitable lactones are especially γ-valerolactone, γ-octalactone, δ-decalactone, and ε-decalactone, especially γ-valerolactone.

Suitable cyclic carbonates are especially 4,5-dimethyl-1,3-dioxolan-2-one, 4,4-dimethyl-1,3-dioxolan-2-one, 4-ethyl-1,3-dioxolan-2-one, 4-methyl-1,3-dioxolan-2-one or 4-(phenoxymethyl)-1,3-dioxolan-2-one.

Suitable lactides are especially 1,4-dioxane-2,5-dione (lactide formed from 2-hydroxyacetic acid, also called "glycolide"), 3,6-dimethyl-1,4-dioxane-2,5-dione (lactide formed from lactic acid, also called "lactide") and 3,6-diphenyl-1,4-dioxane-2,5-dione (lactide formed from mandelic acid).

Preferred hydroxysilanes which are obtained in this way are N-(3-triethoxysilylpropyl)-2-hydroxypropanamide, N-(3-trimethoxysilylpropyl)-2-hydroxypropanamide, N-(3-triethoxysilylpropyl)-4-hydroxypentanamide, N-(3-triethoxysilylpropyl)-4-hydroxyoctanamide, N-(3-triethoxysilylpropyl)-5-hydroxydecanamide and N-(3-triethoxysilylpropyl)-2-hydroxypropyl carbamate.

In addition, suitable hydroxysilanes are also obtainable from the addition of aminosilanes onto epoxides or from the addition of amines onto epoxysilanes. Preferred hydroxysilanes which are obtained in this way are 2-morpholino-4(5)-(2-trimethoxysilylethyl)cyclohexan-1-ol, 2-morpholino-4(5)-(2-triethoxysilylethyl)cyclohexan-1-ol or 1-morpholino-3-(3-(triethoxysilyl)propoxy)propan-2-ol.

Further suitable polyethers containing reactive silane groups are commercially available products, especially the following: MS Polymer^{™} (from Kaneka Corp.; especially the S203H, S303H, S227, S810, MA903 and S943 products); MS Polymer^{™} or Silyl^{™} (from Kaneka Corp.; especially the SAT010, SAT030, SAT200, SAX350, SAX400, SAX725, MAX450, MAX951 products); Excestar^{®} (from Asahi Glass Co. Ltd.; especially the S2410, S2420, S3430, S3630 products); SPUR+* (from Momentive Performance Materials; especially the 1010LM, 1015LM, 1050MM products); Vorasil^{™} (from Dow Chemical Co.; especially the 602 and 604 products); Desmoseal^{®} (from Bayer MaterialScience AG; especially the S XP 2458, S XP 2636, S XP 2749, S XP 2774 and S XP 2821 products), TEGOPAC^{®} (from Evonik Industries AG; especially the Seal 100, Bond 150, Bond 250 products), Polymer ST (from Hanse Chemie AG/Evonik Industries AG, especially the 47, 48, 61, 61LV, 77, 80, 81 products); Geniosil^{®} (from Wacker Chemie AG; especially the STP-E10, STP-E15, STP-E30, STP-E35, WP1, and WP2 products).

Particularly preferred organic polymers containing reactive silane groups have end groups of the formula (VIII) 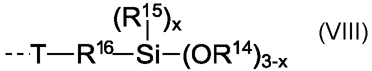 where
R¹⁶ is a linear or branched divalent hydrocarbyl radical which has 1 to 12 carbon atoms and optionally has cyclic and/or aromatic moieties and optionally one or more heteroatoms, especially one or more nitrogen atoms;
T is a divalent radical selected from -O-, -S-, -N(R¹⁷)-, -O-CO-N(R¹⁷)-, -N(R¹⁷)-CO-O- and -N(R¹⁷)-CO-N(R¹⁷)-,
   where R¹⁷ is a hydrogen radical or a linear or branched hydrocarbyl radical which has 1 to 20 carbon atoms and optionally has cyclic moieties, and which optionally has an alkoxysilane, ether or carboxylic ester group; and
R¹⁴, R¹⁵ and x have the definitions already given.

Preferably, R¹⁶ is methylene, 1,3-propylene or 1,4-butylene, where butylene may be substituted by one or two methyl groups.

In an especially preferred embodiment, R¹⁶ is a methylene radical;

Preferably, T is a divalent radical selected from -O-, -S-, -N(R¹⁷)-, -O-CO-N(R¹⁷)-, -N(R¹⁷)-CO-O- and -N(R¹⁷)-CO-N(R¹⁷)-,
where R¹⁷ is a hydrogen radical or a linear or branched hydrocarbyl radical which has 1 to 20 carbon atoms and optionally has cyclic moieties;
R¹⁴ is in particular a methyl or ethyl radical;
R¹⁵ is preferably a methyl radical; and
x is preferably 0 or 1.

The composition according to the present invention preferably comprises up to 10 wt.-%, based on the total composition, of at least one plasticizer **PL**. The composition may be formulated without plasticizer, but it is preferred that small amounts of plasticizer are used for ease of compounding and resulting application and mechanical properties. Preferably, the composition comprises between 1 and 9 wt.-%, based on the total composition, of plasticizer **PL**, preferably between 2 and 8 wt.-%, more preferably between 3 and 6 wt.-%.

The plasticizer may be any of the plasticizers commonly used in compositions based on silane-functional polymers. These include, for example, carboxylic esters such as phthalates, especially dioctyl phthalate, bis(2-ethylhexyl) phthalate, bis(3-propylheptyl) phthalate, diisononyl phthalate or diisodecyl phthalate, diesters of ortho-cyclohexane-dicarboxylic acid, especially diisononyl 1,2-cyclohexanedicarboxylate, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel".

Furthermore, suitable are polymeric plasticizers. These have the advantage of lower migration tendency into surrounding areas and lower contribution to VOC levels.

The term "polymeric plasticizer" herein means a polymeric additive that is liquid at room temperature and contains no hydrolyzable silane groups. In contrast to traditional plasticizers, such as phthalates, the polymeric plasticizers generally have a higher molecular weight.

Preferably, the polymeric plasticizer has an average molecular weight Mₙ of 500 to 12'000 g/mol, in particular 1'000 to 10'000 g/mol, more preferably 2'500 to 5'000 g/mol.

Suitable polymeric plasticizers include polyols, such as those suitable for the production of the organic polymers **P** mentioned there, as long as they are liquid at room temperature, and polyols where the OH-groups have been reacted to chemically inert functional groups. Preferred polyols suitable as polymeric plasticizers include polyether polyols, polyester polyols, polyhydrocarbon polyols, polybutadiene polyols, and poly(meth)acrylate polyols. Particularly preferred are polyether polyols, especially those with an average molecular weight of Mₙ of 500 to 12'000 g/mol, especially 1'000 to 10'000 g/mol, more preferably 2'500 to 5'000 g/mol.

Most preferred plasticizers **PL** for the two-component composition according to the present invention comprise or consist of a trialkyl and/or triaryl phosphate, for example triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates. Preferred trialkyl and/or triaryl phosphate plasticizers **PL** are tris-(2-ethylhexyl)-phosphate (sold under the trade name Disflamoll^{®} TOF by Lanxess), cresyl diphenyl phosphate, tricresyl phosphate, and triphenyl phosphate (all sold under the trade name range Disflamoll^{®} by Lanxess). Trialkyl and/or triaryl phosphate plasticizers have the advantage that they improve the flame-retardant properties of the composition. Most preferred plasticizer is tris-(2-ethylhexyl)-phosphate.

The composition furthermore optionally comprises at least one catalyst for the curing of silane-functional polymers. The addition of catalyst is advantageous to ensure a sufficient curing rate given the fact that low amounts of reactive polymers are used. However, a catalyst is not in every case necessary. In particular when using a highly reactive polymer **P**, for example one with a methylene group between the reactive silane group and the organic linker group (R¹⁶ = methylene in Formula (VIII)), a catalyst may be omitted. Suitable catalysts are especially metal compounds and/or basic nitrogen or phosphorus compounds.

Suitable metal compounds are especially compounds of tin, titanium, zirconium, aluminum or zinc, especially diorganotin(IV) compounds such as, in particular, dibutyltin(IV) diacetate, dibutyltin(IV) dilaurate, dibutyltin(IV) dineodecanoate or dibutyltin(IV) bis(acetylacetonate) and dioctyltin(IV) dilaurate, and also titanium(IV) or zirconium(IV) or aluminum(III) or zinc(ll) complexes, especially with alkoxy, carboxylate, 1,3-diketonate, 1,3-ketoesterate or 1,3-ketoamidate ligands.

Suitable basic nitrogen or phosphorus compounds are especially imidazoles, pyridines, phosphazene bases, secondary or tertiary amines, hexahydrotriazines, biguanides, guanidines, or amidines.

Nitrogen-containing compounds suitable as catalysts are in particular amines, especially N-ethyl-diisopropylamine, N,N,N',N'-tetramethylalkylenediamines, 1,4-diazabicyclo[2.2.2]octane; amidines such as especially 1,8-diazabicyclo[5.4.0]undec-7-ene (DBU), 1,5-diazabicyclo[4.3.0]non-5-ene (DBN), 6-dibutylamino1,8-diazabicyclo-[5.4.0]undec-7-ene; guanidines such as especially tetramethylguanidine, 2-guanidino-benzimidazole, acetylacetoneguanidine, 3-di-o-tolyl-guanidine, 2-tert-butyl-1,1,3,3-tetramethyl guanidine; and imidazoles, in particular N-(3-trimethoxysilylpropyl)-4,5-dihydroimidazole and N-(3-triethoxysilylpropyl)-4,5-dihydroimidazole.

The composition according to the present invention comprises between 70 and 92 wt.-%, preferably between 75 and 91 wt.-%, in particular between 80 and 90 wt.-%, based on the total two-compopnent composition, of at least one filler **F.**

In preferred embodiments, said filler **F** is a thermally conductive filler. The thermally conductive filler suitable as filler **F** is not particularly limited. Suitable thermally conductive fillers to are in particular those that have a coefficient of thermal conductivity that is greater than 5 W/mK, preferably greater than 10 W/mK, more preferably greater than 15 W/mK.

In preferred embodiments, said filler **F** is selected from the list consisting of aluminium oxide, aluminium hydroxide, boron nitride, aluminium nitride, zinc oxide, silver, copper, aluminium, magnesium oxide, magnesium hydroxide, chalk, especially natural, ground or precipitated calcium carbonates, optionally coated with fatty acids, especially stearic acid, aluminosilicate, graphite, and any mixture of these fillers, with the proviso that the amount of chalk in the filler **F**, if present at all, does not exceed 25 wt.-% of the total amount of filler **F.**

Preferred fillers **F** are selected from the list consisting of aluminium oxide, aluminium hydroxide (ATH), boron nitride, aluminium nitride, zinc oxide, magnesium oxide, magnesium hydroxide, silver, copper, aluminium, chalk, aluminosilicate, graphite, and any mixture of these fillers. Preferably, filler **F** comprises less than 15 wt.-% of chalk, based on the total weight of filler **F**, in particular less than 10 wt.-% of chalk, more preferably no chalk at all.

The filler **F** should be in powder form or at least particulate, in order to ensure homogeneous compounding in its high amounts.

Preferably, the total two-composition comprises more than 75 wt.-%, preferably more than 80 wt.-%, based on the total two-component composition, of said filler **F**.

In preferred embodiments component **A** comprises between 70 - 92 wt.-%, more preferably between 72 - 78 wt.-%, based on component **A**, of filler **F**.

In the same or different preferred embodiments component **B** comprises between 70 - 92 wt.-%, more preferably between 76 - 84 wt.-%, based on component **B**, of filler **F**.

In preferred embodiments of the two-component curable composition according to present invention, the filler **F** comprises or consists of aluminium oxide and aluminium hydroxide. This combination has the advantage that it shows especially good thermal conductivity and at the same time excellent flame-retardant properties. This makes it especially suitable for battery assemblies.

It is preferred to use more than one type of filler **F**, for example aluminium oxide and aluminium hydroxide, with different particle sizes. For example, it is advantageous to use a bimodal or multimodal particle size range for the employed fillers. When at least one filler with relatively large particles and at least another one with relatively small particles are used together, a higher density of close-packing of spheres may be achieved, which is beneficial for heat conductivity and compounding when using small amounts of reactive polymer **P** and high amounts of filler **F**.

The two-component composition furthermore optionally comprises at least one dispersion additive. Dispersion additives are well known in the field of coating formulations containing fillers and pigments. They are also known as dispersants or wetting agents and facilitate the compounding of solids into a liquid matrix. In principle all common dispersion additives are suitable, and their suitable amount for a given formulation depends on the type of dispersion additive and relative amount of filler **F** and other consituents, such as polymer **P.** In preferred embodiments, the composition comprises said dispersion additive with an amount of between 0.5 and 5.0 wt.-%, preferably between 0.7 and 4.0 wt.-%, in particular between 1.0 and 3.0 wt.-%, based on the total composition. Suitable such dispersion additives are, for example, Byk-W 996, Byk-W 969, Byk-W 985 (available from Altana) and Disparlon DA-234, DA-325, and DA-375 (available from King Industries).

The two-component composition furthermore comprises at least one drying agent/desiccant **D** wherein **D** is propyltrimethoxysilane (PTMO). A minimal amount of drying agent is required at least in component **A** to avoid premature curing of polymer **P** due to the adsorbed water in the fillers. A formulation without any drying agent is thus not possible. Above 2 wt.-%, based on total two-component composition, of drying agent, a retarding effect is observed. Thus, any amount of PTMO up to 2 wt.-%, based on total two-component composition, acts as drying agent and above that threshold acts as a retarder.

The two-component composition according to the present invention furthermore optionally comprises at least one additional organosilane different from drying agent **D** and retarder **R**, in particular an additional organosilane acting as adhesion promoter and/or co-catalyst. Any additional organosilane must be different from drying agent **D** and retarder **R.**

Organosilanes, in particular those acting as adhesion promoter and/or co-catalyst, may be monomeric or oligomeric organofunctional alkoxysilanes.

Organosilanes have various advantages, some exhibit co-catalytic activity, in particular aminosilanes such as 3-aminopropyl trimethoxysilane, and/or they act as adhesion promotors, such as 3-glycidoxypropyl trimethoxysilane. Nevertheless, in some embodiments the composition does not contain adhesion-promoting silanes, such as amino silanes or glycidoxy silanes. A composition free of adhesion-promoting silanes, in particular amino-functional and/or glycidoxy-functional silanes, has the advantage that the composition may be easily removed from the substrate when the object bonded with the composition needs to be disassembled, for example during a battery replacement operation.

Preferred organosilanes acting, for example, as adhesion promoters and/or crosslinkers are in particular aminosilanes, mercaptosilanes, epoxysilanes, (meth)acryloylsilanes, anhydridosilanes, carbamatosilanes, alkylsilanes or iminosilanes, oligomeric forms of these silanes, adducts formed from primary aminosilanes with epoxysilanes or (meth)acryloylsilanes or anhydridosilanes, amino-functional alkylsilsesquioxanes, 3-glycidoxypropyltrimethoxysilane, 3-glycidoxypropyltriethoxysilane or 3-ureidopropyltrimethoxysilane, or oligomeric forms of these silanes.

According to WO2020165288, preferred organosilanes acting as desiccants or drying agents are in particular tetraethoxysilane, vinyltrimethoxysilane, vinyltriethoxysilane or organoalkoxysilanes having a functional group in the α-position to the silane group, especially N-(methyldimethoxysilylmethyl)-O-methylcarbamate, (methacryloyloxymethyl)silanes, and methoxymethylsilanes. It is noteworthy, that propyltrimethoxysilane (PTMO) is not mentioned as a particularly good drying agent. Surprisingly, combined with the addition of retarders, PTMO acts as a very good drying agent.

The organosilanes preferably comprised in the composition may be monomeric organosilanes or oligomeric organosilanes.

Examples of suitable monomeric organosilanes are shown in formula (II), 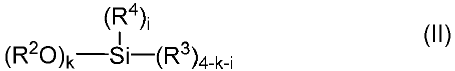 where
R² is a monovalent alkyl radical having 1 to 6 carbon atoms, preferably 1 or 2 carbon atoms, most preferably a methyl radical;
R³ is a monovalent, linear or branched hydrocarbon radical having 1 to 20 carbon atoms and optionally containing olefinic, aromatic and/or cyclic moieties and optionally containing heteroatoms selected from O, N, S, and Si;
R⁴ is is a monovalent linear, branched, or cyclic alkyl or arakyl radical having 1 to 12 carbon atoms, preferably 1 to 8 carbon atoms, most preferably a methyl radical;
index i is an integer with a value of 0 or 1, preferably 0;
index k is an integer with a value of 2 or 3, with the provisio that if i = 1 then k = 2.

In preferred embodiments, R³ is an aminoalkyl radical selected from -CₚH₂ₚ-NH₂,
-CₚH₂ₚ-NH-R⁵, -CₚH₂ₚ-NH-C_{d}H_{2d}-NH₂, -CₚH₂ₚ-NH-C_{d}H_{2d}-NH-CₑH₂ₑ-NH₂, -CₚH₂ₚ-NH-C_{d}H_{2d}-NH-R⁵, and -C_{P}H₂ₚ-NH-C_{d}H_{2d}-NH-CₑH₂ₑ-NH-R⁵; where
R⁵ is a monovalent linear, branched, or cyclic alkyl or arakyl radical having 1 to 12 carbon atoms, preferably 1 to 6 carbon atoms;
index p is an integer with a value of 1 to 6;
indices d and e are independently integers with a value of 2 to 6.

In other preferred embodiments, R³ is a glycidoxyalkyl radical.

In further preferred embodiments, R³ is a mercapto- or hydroxyalkyl radical.

Suitable oligomeric silanes are linear, cyclic, or branched oligomers of the aforementioned monomeric organosilanes. They may be oligomers of one or more than one type of organosilane.

One advantage of using oligomeric organosilanes is that lower VOC levels can be achieved when employing them in greater amounts compared to purely monomeric silanes.

Preferred monomeric or oligomeric aminofunctional alkoxysilanes include N-(n-Butyl)-3-aminopropyltrimethoxysilane, 3-aminopropyltrimethoxysilane, 3-aminopropyldimethoxymethyl-silane, N-(2-aminoethyl)-3-aminopropyltrimethoxysilane, N-(2-aminoethyl)-3-aminopropyldimethoxymethylsilane, N-(2-aminoethyl)-N'-[3-(trimethoxysilyl)-propyl]ethylenediamine and oligomers obtained from the condensation of the mentioned aminosilanes, optionally oligomerized together with alkylalkoxysilanes, in particular methyltrimethoxysilane, ethyltrimethoxysilane, propyltrimethoxysilane, vinyltrimethoxysilane, n-butyltrimethoxysilane, isobutyltrimethoxysilane, phenyltrimethoxysilane, and octyltrimethoxysilane. Also preferred are monomeric or oligomeric or the analogs thereof with ethoxy in place of methoxy groups.

Preferred glycidoxyfunctional organosilanes are
glycidoxypropyltrimethoxysilane and glycidoxypropyltriethoxysilane and oligomers containing glycidoxypropyl groups, stemming from monomeric glycidoxypropylalkxoysilanes condensated with the aforementioned organosilanes or with themselves.

The composition may comprise further constituents, especially the following auxiliaries and additives:
- additional desiccants or drying agents, especially orthoformic esters, calcium oxide or molecular sieves;
- additional plasticizers, especially reactive plasticizers in the form of monofunctional organic polymers or silanes, i.e. those that are silane-reactive only at one end;
- solvents;
- further inorganic or organic fillers, especially baryte (heavy spar), talcs, quartz flours, quartz sand, dolomites, wollastonites, kaolins, calcined kaolins, mica (potassium aluminum silicate), molecular sieves, magnesium hydroxide, silicas including finely divided silicas from pyrolysis processes, industrially produced carbon blacks, metal powders such as iron or steel, PVC powder or hollow spheres;
- fibers, especially glass fibers, carbon fibers, metal fibers, ceramic fibers or polymer fibers such as polyamide fibers or polyethylene fibers;
- dyes;
- pigments, especially titanium dioxide or iron oxides;
- rheology modifiers, in particular thickeners or thixotropy additives, especially sheet silicates such as bentonites, derivatives of castor oil, hydrogenated castor oil, polyamides, polyurethanes, urea compounds, fumed (pyrogenic) silicas, cellulose ethers or hydrophobically modified polyoxyethylenes;
- stabilizers against oxidation, heat, light or UV radiation;
- natural resins, fats or oils such as rosin, shellac, linseed oil, castor oil or soya oil;
- non-reactive polymers that are preferably solid at room temperature such as, in particular, homo- or copolymers of unsaturated monomers, especially from the group comprising ethylene, propylene, butylene, isobutylene, isoprene, vinyl acetate or alkyl (meth)acrylates, especially polyethylenes (PE), polypropylenes (PP), polyisobutylenes, ethylene-vinyl acetate copolymers (EVA) or atactic poly-α-olefins (APAO);
- flame-retardant substances, especially the already mentioned filler aluminum hydroxide, magnesium hydroxide, or, in particular, the already mentioned organic phosphoric esters such as, in particular, triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenyl phosphate), bisphenol A bis(diphenyl phosphate) or ammonium polyphosphates;
- surface-active substances, especially leveling agents, deaerating agents or defoamers;
- biocides, especially algicides, fungicides or substances that inhibit fungal growth;
and other substances customarily used in curable compositions. It may be advisable to chemically or physically dry certain constituents before mixing them into the composition.

In preferred embodiments of the two-component composition according to the invention, the composition does not contain polydiorganosiloxanes.

The composition, especially component **A**, is preferably produced and stored with exclusion of moisture. Typically, it is storage-stable with exclusion of moisture in a suitable package or arrangement, such as, more particularly, a bottle, a canister, a pouch, a bucket, a vat or a cartridge.

Due to the two-component setup of the composition according to the present invention, wherein the moisture-reactive polymers **P** are stored in component **A** and fillers **F** are stored in both component **A** and **B**, it is not necessary to expensively dry fillers **F** in component **B** when they naturally contain significant amounts of adsorbed water. In cases where non-dried fillers **F** are used in component **B**, the naturally present amount of adsorbed water in those fillers is often sufficient for curing of the low amounts of polymer **P** used.

The water mentioned for component **B** may be added accordingly, or it may be present from the beginning as impurity in not previously dried fillers **F**. Fillers **F** normally contain, if not dried, up to 1 wt.-% or more of water bound to their surface or within pores. This water is normally not chemically bound but only physisorbed and is able to promote the crosslinking of the polymers when the composition is mixed. Depending on the type and dryness of fillers **F** used, however, it may be advantageous to add water to component **B**, preferably in the above specified amounts.

In preferred embodiments, the composition comprises between more than 0 and 5 wt.-%, preferably between 0.1 and 3 wt.-%, in particular between 0.5 and 2 wt.-%, based on the total two-component composition, of water. Said water should exclusively or at least predominantly be present in component **B**, as significant amounts of chemically accessible water in component **A** are detrimental to the storage stability of component **A**. Water in component B is however required in order to ensure a proper and fast curing of the composition after mixing of components **A** and **B**.

In preferred embodiments, component **B** of the composition according to the invention comprises between 0.1 - 2.5 wt.-% of water, preferably between 0.5 and 2.5 wt.-% of water, based on component **B**. As mentioned before, said water can be added in free or emulsified form, and/or it can already be present in form of adsorbed and chemically accessible water within filler **F** contained in component **B**.

In the present document, "two-component" refers to a composition in which the constituents of the composition are present in two different components which are stored in separate containers. Normally, the reactive species, i.e. polymer **P**, is stored in the first component, and water is present in the second component. Only shortly before or during the application of the composition are the two components mixed with one another, whereupon the mixed composition cures under the action of moisture from air humidity and from the second component.

Any second or optionally further components is/are mixed with the first component prior to or on application, especially by means of a static mixer or by means of a dynamic mixer.

In the case of a two-component composition, it is still preferable to dry the filler **F** in the first component in order to ensure storage stability. The fillers of the second component, however, do not have this restriction.

In preferred embodiments of the two-component composition according to the present invention, the composition therefore consists of two individual components **A** and **B** that are stored in separated containers and mixed before or during applications to yield the moisture-curable composition, wherein said component **A** contains polymer **P**, filler **F,** said component **B** contains water and filler **F**; and all other constituents of the composition may be present in either one or both of the components **A** and **B**.

A preferred embodiment of a two-component moisture-curable composition according to the present invention consists of a component **A** comprising, based on component **A**,
- 6-20 wt.-% of said polymer **P**;
- 70 - 85 wt.-% of said filler **F**;
- Optionally 3-4.5 wt.-% of said plasticizer **PL**;
- 1.5 - 2.5 wt.-% of said at least one additional organosilane different from drying agent **D** and retarder **R**;
- 1.5 - 2.5 wt.-% of said drying agent **D**;
- 0 - 1-5 wt.-%, of said retarder **R**;
and said component **B** comprises, based on component **B**,
- 75 - 92 wt.-% of at least on of said filler **F**;
- Optionally 3-5 wt.-% of said plasticizer **PL**;
- 0.1 - 2.5 wt.-% of water;
- 0.01 - 0.5 wt.-% of said catalyst **C**.

A preferred volumetric mixing ratio of component **A** to component **B** for above two-component composition is between 1:2 and 2:1, preferably between 1:1.5 and 1.5:1, in particular between 1:1.2 and 1.2:1, most preferably 1:1.

The water mentioned for component **B** may be added accordingly, or it may be present from the beginning as impurity in not previously dried fillers **F**. Fillers **F** normally contain, if not dried, up to 1 wt.-% or more of water bound to their surface or within pores. This water is normally not chemically bound but only physisorbed and is able to promote the crosslinking of the polymers when the composition is mixed. Depending on the type and dryness of fillers **F** used, however, it may be advantageous to add water to component **B**, preferably in the above specified amounts.

An especially preferred embodiment of a two-component moisture-curable composition according to the present invention consists of a component **A** comprising, based on component **A**,
- 6-16 wt.-% of said polymer **P**;
- 70 - 80 wt.-% of said filler **F**;
- 3.5 - 4.5 wt.-% of said plasticizer **PL**;
- 1.5 - 2.5 wt.-% of said at least one additional organosilane different from drying agent **D** and retarder **R**;
- 2 wt.-% of said drying agent **D**;
- 0.5 wt.-%, of said retarder **R**, namely phenyltrimethoxysilane;
and said component **B** comprises, based on component **B**,
- 75 - 85 wt.-% of said filler **F**;
- 8-9 wt.-% of said plasticizer **PL**;
- 0.5 - 2.5 wt.-% of water;
- 0.01 - 0.5 wt.-% of said catalyst **C**.

Another especially preferred embodiment of a two-component moisture-curable composition according to the present invention consists of a component **A** comprising, based on component **A**,
- 6-16 wt.-% of said polymer **P**;
- 70 - 80 wt.-% of said filler **F**;
- 3-4 wt.-% of said plasticizer **PL**;
- 1.5 - 2.5 wt.-% of said at least one additional organosilane different from drying agent **D** and retarder **R**;
- 2 wt.-% of said drying agent **D**;
- 1 wt.-%, of said retarder **R**, namely octyltrimethoxysilane;
and said component **B** comprises, based on component **B**,
- 75 - 85 wt.-% of said filler **F**;
- 8-9 wt.-% of said plasticizer **PL**;
- 0.5 - 2.5 wt.-% of water;
- 0.01 - 0.5 wt.-% of said catalyst **C**.

Another especially preferred embodiment of a two-component moisture-curable composition according to the present invention consists of a component **A** comprising, based on component **A**,
- 6-16 wt.-% of said polymer **P**;
- 70 - 80 wt.-% of said filler **F**;
- 3-4 wt.-% of said plasticizer **PL**;
- 1.5 - 2-5 wt.-% of said at least one additional organosilane different from drying agent **D** and retarder **R**;
- 2 wt.-% of said drying agent **D**;
- 1 wt.-%, of said retarder **R**, namely propyltrimethoxysilane; and said component **B** comprises, based on component **B**,

- 75 - 85 wt.-% of said filler **F**;
- 8-9 wt.-% of said plasticizer **PL**;
- 0.5 - 2.5 wt.-% of water;
- 0.01 - 0.5 wt.-% of said catalyst **C**.

All the preferred embodiments described for the individual consituents, e.g. polymer **P**, of above two-component composition are the same as described in a more general manner further above in the description.

The two-component composition according to the present invention is preferably applied at ambient temperature, such as room temperature, preferably within a temperature range between 0°C and 45°C, especially 5°C to 35°C, and cures under these conditions.

On application and after mixing of the two components **A** and **B**, the crosslinking reaction of the silane groups commences, initiated by the reaction of water and the alkoxysilane groups present in the mixture. Silane groups present can condense with silanol groups present to give siloxane groups (Si-O-Si groups). Silane groups present can also be hydrolyzed on contact with moisture to give silanol groups (Si-OH groups) and form siloxane groups (Si-O-Si groups) through subsequent condensation reactions. As a result of these reactions, the composition ultimately cures. The catalysts described further above accelerate this curing mechanism catalytically.

The composition is in principle suitable for a multitude of uses, for example a molding, elastomer, film or membrane, as a potting compound, sealant, gap filler, adhesive, covering, or coating for construction and industrial applications, for example as a seam seal, cavity seal, electrical insulation compound, assembly adhesive, bodywork adhesive, seal, or gap filler. The composition is particularly suitable as an adhesive, gap filler, and/or sealant, especially in automotive manufacturing, for batteries, electronic elements, engine control units, anti-lock breaking and electronic stability control and safety systems, DC/DC converter of hybrid electric vehicles, advanced driver-assistance systems, sensors, or control units.

For an application as adhesive, gap filler, or sealant, the composition preferably has a pasty consistency with structurally viscous properties. Such a pasty sealant or adhesive is especially applied to a substrate from standard cartridges which are operated manually, by means of compressed air or with a battery, or from a vat or hobbock by means of a delivery pump or an extruder, optionally by means of an application robot.

On application, the composition is preferably applied to at least one substrate. Suitable substrates are especially
- glass, glass ceramic, concrete, mortar, brick, tile, gypsum and natural rocks such as limestone, granite or marble;
- metals and alloys such as aluminum, iron, steel and nonferrous metals, and also surface-finished metals and alloys such as galvanized or chromed metals or surface coated metals, such as Kynar^{®}- or Duranar^{®}-coated aluminum;
- leather, textiles, paper, wood, woodbase materials bonded with resins, for example phenolic, melamine or epoxy resins, resin-textile composites and further polymer composites;
- plastics such as polyvinyl chloride (rigid and flexible PVC), acrylonitrilebutadiene-styrene copolymers (ABS), polycarbonate (PC), polyamide (PA), polyesters, poly(methyl methacrylate) (PMMA), epoxy resins, polyurethanes (PUR), polyoxymethylene (POM), polyolefins (PO), polyethylene (PE) or polypropylene (PP), ethylene/propylene copolymers (EPM) and ethylene/propylene/diene terpolymers (EPDM), and also fiber-reinforced plastics such as carbon fiber-reinforced plastics (CFP), glass fiber-reinforced plastics (GFP) and sheet molding compounds (SMC), where the plastics may have been surface-treated by means of plasma, corona or flames;
- coated substrates such as powder-coated metals or alloys;
- electrocoated (e-coat) surfaces coated by electrophoretic painting processes;
- paints or varnishes, especially automotive topcoats.

If required, the substrates can be pretreated prior to the application of the composition, especially by chemical and/or physical cleaning methods or by the application of an adhesion promoter, an adhesion promoter solution or a primer.

In general, it is not required to pre-treat the surfaces prior to application of the composition. The composition shows in preferred embodiments an excellent adhesion profile on a large variety of unprimed, non-pretreated, and even uncleaned materials. In other preferred embodiments, the composition shows good adhesion, but can be easily removed by pulling. These compositions preferably do not contain adhesion promoting organosilanes as described further above.

Manufactured articles are any physical objects, to which the disclosed two-component composition was added during production of said physical objects. A preferred manufactured article is a battery or an electric or electronic device or electronic element.

Another aspect of the present invention is thus a manufactured article that was bonded, coated or sealed using a two-component composition according to the invention.

It is possible to bond or seal two identical or two different substrates, especially the aforementioned substrates.

The compositions disclosed herein possess excellent thermal conductivity, in particular of ≥ 1.5 W/mK, in preferred embodiments of ≥ 2.0 W/mK or higher, according to ASTM D5470.

The compositions disclosed herein generally possess low viscosities of less than 1000 Pa·s at a shear rate of 1 s⁻¹. Upon mixing of the two components, the viscosity initially remains at lower levels (up to 2000 Pa·s) before rapidly increasing to usually over 8000 Pa·s.

Furthermore, the compositions disclosed herein have the advantage of good compressibility, good sag resistance and good flame-retardant properties.

Another aspect of the present invention is the use of an adhesive composition as described herein to adhesively bond, coat, or seal substrates.

In preferred embodiments of said use, at least one of these substrates is a battery or an electric or electronic device or electronic element.

The use of the composition gives rise to an article that was bonded, sealed, or coated with the composition. The article is especially a built structure, especially a structure built by structural engineering or civil engineering, an industrially manufactured good or a consumable good, especially a domestic appliance or a mode of transport such as, more particularly, an automobile, a bus, a truck, a rail vehicle, a ship, an aircraft, a drone, or a helicopter; or the article may be an installable component thereof.

Another aspect of the present invention is thus a substrate, adhesively sealed, coated, or bonded by an adhesive composition described herein.

Another aspect of the present invention is the use of a retarder **R** in a two-component composition based on organic polymers containing reactive silane groups according to the specification above, wherein said retarder **R** is selected from the list containing phenylmethoxysilane, vinyltrimethoxysilane, octyltrimethoxysilane, propytrimethoxysilane, and any mixture of these retarders in a content range of between more than 0 and 2% by weight, based on the total composition, to delay curing of a two-component composition based on organic silane-functional polymers.

### Examples

Adduced hereinafter are working examples which are intended to elucidate the invention described in detail. It will be appreciated that the invention is not restricted to these described working examples.

The term "standard climatic conditions" or "standard climate" refers to a temperature of 23±1°C and a relative air humidity of 50±5%.

### Test methods:

**Viscosity** was determined on a MCR 302 rheometer (Anton Paar) according to ISO 3219. Measurement parameters were: Rotation 0.1 - 10 s-1, measurement point at 10 s-1, temperature 20°C, gap 0.5 mm.

To determine the mechanical properties, the mixed composition was applied to a silicone-coated release paper to form a film of 2 mm thickness, which was allowed to cure for 7 days in a standard climate. After this time, a series of dumbbell-shaped test specimens 75 mm long with a web length of 30 mm and a web width of 4 mm were punched out of the film and tested for **tensile strength, elongation at break,** and **E-modulus 0-5%** (at 0-5% elongation). Furthermore, some test specimens were punched out to determine the **tear propagation strength** and tested according to DIN ISO 34-1, method B (angular test specimen) at a tensile speed of 500 mm/min.

### Compounds used:

**Table 1: Compounds used for the example compositions.**

| **Name** | **Description, trade name** |
|---|---|
| STP-E15 (polymer **P**) | Polyether polymer having trimethoxysilylpropyllcarbamate end groups (Geniosil^{®} STP-E15, Wacker) |
| PhTMO (retarder **R1**) | Phenyltrimethoxysilane (Geniosil^{®} PTM, Wacker) |
| VTMO (retarder **R2**) | Vinyltrimethoxysilane (Silquest^{®} A-171, Momentive) |
| OCTMO (retarder **R3**) | Octyltrimethoxysilane (Dynasylan^{®} OCTMO, Evonik) |
| PTMO (retarder **R4**) | Propyltrimethoxysilane (Dynasylan^{®} PTMO, Evonik) |
| Martinal TM3810 (filler **F**) | Aluminium hydroxide (Al(OH)₃) (Martoxid^{®} TM-3810, Huber Martinswerk); |
| Silquest A1120 (adhesion promoter/catalyst) | N(beta-aminoethyl)gamma-aminopropyltrimethoxysilane (Silquest^{®} A-1120, Momentive) |
| TOF (plasticizer **PL**) | Tris-(2-Ethylhexyl)-phosphate (Disflamoll^{®} TOF, Lanxess) |
| PTMO (Drying Agent / Desiccant **D**) | Propyltrimethoxysilane (Dynasylan^{®} PTMO, Evonik) |
| Water | H₂O |
| Catalyst **C** | DBTL |

### Compositions based on polymers containing reactive silane groups:

Comparative examples, containing no retarder, are identified in Tables 2 to 4 by "(Ref.)".

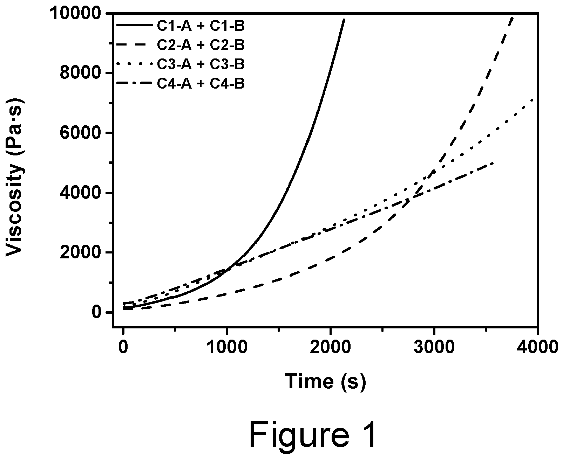

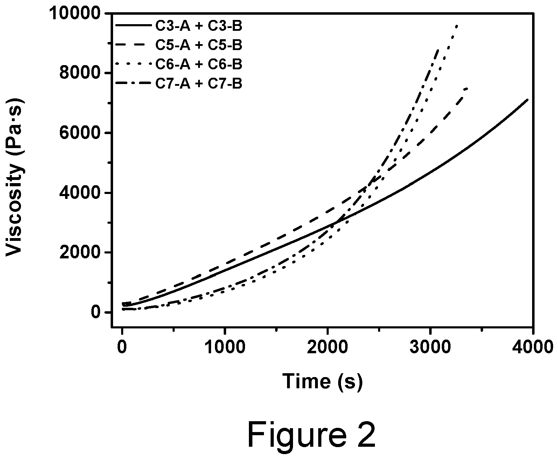

A series of example two-component compositions was prepared by mixing the ingredients of each respective component **A** and **B** shown in Table 2 (components **A**) and Table 3 (components **B**) in the indicated sequence as listed in the table under nitrogen atmosphere in a vacuum mixer until homogeneous pastes were obtained. The individual components **A** and **B** were filled into internally coated aluminum spreading piston cartridges that were closed airtight and stored under standard climate conditions for at least 24 h until the testing protocol was employed. The mechanical test results of these 1:1 mixtures (w/w) are shown in Table 4 for selected compositions. The development of the viscosity can be seen in Figures 1 and 2 for varying amounts and different types of retarders. From Table 4 it can be concluded that the mechanical properties do not significantly change upon addition of retarder and that the material exhibits the same mechanical performance. Figures 1 and 2 show the optimal viscosity development that offers longer open time with subsequent fast curing behavior.

### Descriptions of the Figures

- **Figure 1**:: Curves showing the development of viscosity with varying amounts of retarder 1, based on mixtures of C1-A and C1-B, C2-A and C2-B, C3-A and C3-B, and C4-A and C4-B, respectively.
- **Figure 2**:: Curves showing the development of viscosity with different types of retarders and varying amounts of drying agent/desiccants, based on mixtures of C3-A and C3-B, C5-A and C5-B, C6-A and C6-B, and C7-A and C7-B, respectively.

**Table 2: Example compositions components A (all numbers in wt.-%, based on the total individual composition A).**

| **Composition (components A)** | **C1-A** (Ref.) | **C2-A** | **C3-A** | **C4-A** | **C5-A** | **C6-A** | **C7-A** |
|---|---|---|---|---|---|---|---|
| STP-E15 (polymer **P**) | 15.5 | 15.5 | 15.5 | 15.5 | 15.5 | 15.5 | 15.5 |
| Retarder 1 | - | 0.5 | 1 | 1.5 | - | - | - |
| Retarder 2 | - | - | - | - | 1 | - | - |
| Retarder 3 | - | | | | - | 1 | |
| Retarder 4 | - | - | - | - | - | - | 1 |
| Martinal TM3810 (filler **F**) | 76 | 76 | 76 | 76 | 76 | 76 | 76 |
| Silquest A 1120 (adhesion promoter/catalyst) | 2 | 2 | 2 | 2 | 2 | 2 | 2 |
| TOF (plasticizer **PL**) | 4.5 | 4 | 3.5 | 3 | 3.5 | 3.5 | 3.5 |
| Drying Agent **D** | 2 | 2 | 2 | 2 | 2 | 2 | 2 |

**Table 3: Example compositions components B (all numbers in wt.-%, based on the total individual composition B).**

| **Composition (components B)** | **C1-B** (Ref.) | **C2-B** | **C3-B** | **C4-B** | **C5-B** | **C6-B** | **C7-B** |
|---|---|---|---|---|---|---|---|
| TOF (plasticizer **PL**) | 8.5 | 8.5 | 8.5 | 8.5 | 8.5 | 8.5 | 8.5 |
| Martinal TM3810 (filler **F**) | 79.44 | 79.44 | 79.44 | 79.44 | 79.44 | 79.44 | 79.44 |
| Water | 2 | 2 | 2 | 2 | 2 | 2 | 2 |
| Catalyst **C** | 0.06 | 0.06 | 0.06 | 0.06 | 0.06 | 0.06 | 0.06 |

**Table 4: Mechanical test results of the investigated samples.**

| **Test results compositions A+B (1:1 volume mixture)** | **C1-A** + **C1-B** (Ref.) | **C2-A + C2-B** | **C3-A + C3-B** | **C4-A + C4-B** | **C5-A + C5-B** | **C6-A + C6-B** | **C7-A + C7-B** |
|---|---|---|---|---|---|---|---|
| Tensile Strength (MPa) | 2.2 | 2.3 | 2.3 | 1.9 | 1.6 | 2.0 | 2.2 |
| Elongation at break (%) | 16 | 18 | 17 | 11 | 11 | 17 | 17 |
| Tear Resistance (N/mm) | 4.3 | 4.3 | 4.5 | 4.6 | 4.4 | 4.5 | 4.6 |
| E-Modulus 0-5% (MPa) | 18.9 | 18.7 | 20.8 | 22.1 | 21.0 | 18.4 | 21.3 |

## Claims

1. A two-component composition comprising
in a first component **A**
- between 3 and 15 wt.-%, based on the total two-component composition, of at least one organic polymer **P** containing reactive silane groups;
- at least one filler **F**;
- optionally at least one plasticizer **PL**;
- between 0 and 3 wt.-%, based on the total two-component composition, of at least one additional organosilane different from drying agent **D** and retarder **R**, preferably acting as adhesion promoter and/or co-catalyst;
- between more than 0 and 2 wt.-%, based on the total two-component composition, of at least one drying agent **D**, wherein drying agent **D** is propyltrimethoxysilane;
- between more than 0 and 2 wt.-%, based on the total two-component composition, of at least one retarder **R** selected from alkyl- or alkenyltrimethoxysilanes;
in a second component **B**
- at least one filler **F**;
- optionally at least one plasticizer **PL**;
- between more than 0 and 5 wt.-%, based on the total two-component composition, of water;
- between 0 and 1 wt.-%, based on the total two-component composition, of at least one catalyst **C**;
wherein the total amount based on the total two-component composition of filler **F** is between 70 and 92 wt.-%; and
wherein the total amount based on the total two-component composition of plasticizer **PL** is up to 10 wt.-%.

2. The two-component composition as claimed in claim 1, **characterized in that** the polymer **P** comprises or consists of trimethoxysilylpropylcarbamate-terminated polyethers.

3. The two-component composition as claimed in claim 1, **characterized in that** the filler **F** comprises or consists of aluminium oxide, aluminium hydroxide, boron nitride, aluminium nitride, zinc oxide, magnesium oxide, silver, copper, aluminium, chalk, aluminosilicate, graphite, and any mixture of these fillers.

4. The two-component composition as claimed in claim 1, **characterized in that** said retarder **R** is selected from the list containing phenylmethoxysilane, vinyltrimethoxysilane, octyltrimethoxysilane, propytrimethoxysilane, and any mixture of these retarders.

5. The two-component composition as claimed in claim 1, **characterized in that** the plasticizer **PL** comprises or consists of a trialkyl and/or triaryl phosphate.

6. The two-component composition as claimed in claim 1, **characterized in that** said additional organosilane different from drying agent **D** and retarder **R** comprises or consists of an aminosilane.

7. The two-component composition as claimed in claim 1, **characterized in that** said catalyst **C** is a metal compound or a basic nitrogen or phosphorus compound.

8. The two-component composition as claimed in any of claims 1 to 7, **characterized in that** said polymer **P** has end groups of the formula (VIII) 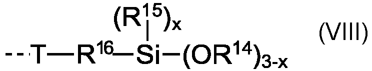 wherein
R¹ is a linear or branched divalent hydrocarbyl radical having 1 to 12 carbon atoms, preferably a methylene radical;
R² is a divalent radical selected from -O-, -S-, -N(R³)-, -O-CO-N(R³)-, -N(R³)-CO-O- and -N(R³)-CO-N(R³)-, where R³ is a hydrogen radical or a linear or branched hydrocarbyl radical which has 1 to 20 carbon atoms and optionally has cyclic moieties;

9. The two-component composition as claimed in any of claims 1 to 8, **characterized in that** the composition consists of two individual components **A** and **B** that are stored in separated containers and mixed before or during applications to yield the curable composition, wherein said component **A** contains polymer **P**, drying agent **D**, retarder **R**, optionally additional organosilanes, and filler **F**; said component **B** contains water and catalyst **C**; and all other constituents of the composition may be present in either one or both of the components **A** and **B**.

10. The two-component composition as claimed in claim 9, **characterized in that**
said component **A** comprises, based on component **A**,
- preferably 6 - 16 wt.-% of said polymer **P**;
- preferably 70 - 80 wt.-% of said filler **F**;
- preferably 3 - 4.5 wt.-% of said plasticizer **PL**;
- preferably 1.5 - 2.5 wt.-% of said at least one additional organosilane different from drying agent **D** and retarder **R**;
- preferably 1.5 - 2.5 wt.-% of said drying agent **D**;
- preferably 0.1 - 1.5 wt.-%, especially 0.25 - 0.75 wt.-% of said retarder **R**;
and said component **B** comprises, based on component **B**,
- preferably 75 - 85 wt.-% of at least on of said filler **F**;
- preferably 7 - 9 wt.-% of said plasticizer **PL**;
- preferably 0.1 - 2.5 wt.-% of water;
- preferably 0.01 - 0.5 wt.-% of said catalyst **C**.

11. Use of a two-component composition according to any of claims 1 to 10 to adhesively bond, coat, or seal substrates.

12. Use of a two-component composition according to any of claims 1 to 10 as a thermally conductive gap filler.

13. The use according to claims 11 to 12, **characterized in that** at least one of the substrates is part of a battery or an electronic device.

14. A manufactured article that was bonded, coated or sealed using a two-component composition according to any claims of 1 to 10.

15. Use of a retarder **R** in a two-component composition based on organic polymers containing reactive silane groups according to claims 1 to 14, wherein said retarder **R** is selected from the list containing phenylmethoxysilane, vinyltrimethoxysilane, octyltrimethoxysilane, propytrimethoxysilane, and any mixture of these retarders in a content range of between more than 0 and 2% by weight, based on the total composition, to delay curing of a two-component composition based on organic silane-functional polymers.
